# EUROPÄISCHE PATENTANMELDUNG

(11) **EP 4 575 802 A1**
(43) Veröffentlichungstag der Anmeldung: **25.06.2025**
(21) Anmeldenummer: 23218990.2
(22) Anmeldetag: 21.12.2023
(51) Int. Cl.: G06F 11/36, B60W 30/06, B62D 15/02

(54) **COMPUTER-IMPLEMENTIERTES VERFAHREN ZUR VERIFIKATION EINES SOFTWARE-BASIERTEN VERHALTENSPLANERS EINER AUTOMATISIERTEN PARKFUNKTION UND VERWENDUNG EINES SOLCHEN VERFAHRENS**

(71) Anmelder: Robert Bosch GmbH, 70442 Stuttgart (DE)
(72) Erfinder: Holzwarth, Philip, 70469 Stuttgart (DE); Koenig, Lukas, 71723 Grossbottwar (DE); Hanselmann, Michael, 70825 Korntal-Muenchingen (DE)

(57) **Zusammenfassung**

Es wird ein Computer-implementiertes Verfahren zur Verifikation eines Softwarebasierten Verhaltensplaners (15) für eine automatisierte Parkfunktion vorgeschlagen, wobei das Verifikationsverfahren zumindest die folgenden Schritte umfasst:
Bereitstellen mindestens einer formalen Anforderung (11) als Kriterium für die Korrektheit von Entscheidungen des Verhaltensplaners (15),
Bereitstellen eines Situationsmodells (12, 13) zur Beschränkung des Zustandsraums des Verhaltensplaners (15) entsprechend einer vorgebbaren Situation,
Erzeugen einer Model-Checker-Repräsentation des Verhaltensplaners (15) unter Berücksichtigung des bereitgestellten Situationsmodells (12, 13),
Analysieren der Model-Checker-Repräsentation des Verhaltensplaners mit einem Model Checking Verfahren (10) im Hinblick auf die vorgegebenen formalen Anforderungen (11).

Den besonderen Anforderungen an eine automatisierte Parkfunktion wird dadurch Rechnung getragen, dass die Verfügbarkeit eines Fahrers durch mindestens einen Modellparameter des Situationsmodells (12) beschrieben wird, so dass die Verfügbarkeit des Fahrers bei der Analyse der Model-Checker-Repräsentation des Verhaltensplaners (15) berücksichtigt wird.

## Beschreibung

### Stand der Technik

Die Erfindung betrifft ein Computer-implementiertes Verfahren zur Verifikation eines Software-basierten Verhaltensplaners einer automatisierten Parkfunktion für ein Fahrzeug.

Den Entscheidungen und der Planung eines derartigen Verhaltensplaners wird ein Laufzeit-Situationsmodell zugrunde gelegt, das die zeitliche und örtliche Entwicklung einer Verkehrssituation in der näheren Umgebung des Fahrzeugs auf der Basis von Messdaten eines Perzeptionsmoduls beschreibt. Üblicherweise verarbeitet das Perzeptionsmodul Messdaten mehrerer fahrzeugeigener Sensoren unterschiedlicher Sensormodalitäten, wie Inertialsensoren, Video-, Radar-, Ultraschall- und/oder Lidarsensoren. Das Perzeptionsmodul kann aber auch fahrzeugfremde, infrastruktur-basierte Informationsquellen nutzen, wie beispielsweise Systeme zur Positionsbestimmung (GNSS) und Kartendaten, um Zustandsdaten des Fahrzeugs zu bestimmen und Orts- und Bewegungsparameter weiterer Verkehrsteilnehmer zu ermitteln. Für den Verhaltensplaner einer Parkfunktion ergeben sich hierbei besondere Herausforderungen. So ist die Funktionsfähigkeit des Perzeptionsmoduls in Parksituationen häufig eingeschränkt, beispielsweise aufgrund der Abschattung durch andere parkende Fahrzeuge oder Gebäude. Auch die möglichen Trajektorien weiterer Verkehrsteilnehmer sind mit einer vergleichsweise hohen Unsicherheit behaftet, da die Fortbewegung auf öffentlichen und privaten Parkplätzen und in Parkräumen meist weniger Regeln unterworfen ist und damit weniger strukturiert ist, als die Fortbewegung im öffentlichen Straßenverkehr.

Das hier in Rede stehende Verifikationsverfahren umfasst zumindest die folgenden Schritte:
- Bereitstellen mindestens einer formalen Anforderung als Kriterium für die Korrektheit von Entscheidungen des Verhaltensplaners der Parkfunktion,
- Bereitstellen eines Situationsmodells zur Beschränkung des Zustandsraums des Verhaltensplaners entsprechend einer vorgebbaren Situation, wobei die Situation auf Basis von Modellparametern beschrieben wird, die während des Fahrzeugbetriebs mit Hilfe eines Perzeptionsmoduls ermittelt werden,
- Erzeugen einer Model-Checker-Repräsentation des Verhaltensplaners unter Berücksichtigung des bereitgestellten Situationsmodells und
- Analysieren der Model-Checker-Repräsentation mit einem Model Checking Verfahren im Hinblick auf die mindestens eine formale Anforderung.

Im Rahmen des industriellen Entwicklungsprozesses von Softwarekomponenten einer automatisierten Parkfunktion, wie Verhaltensplanern, muss die Korrektheit der Implementierung geprüft werden. Diese Überprüfung erfolgt derzeit in der Regel testbasiert, wobei beispielsweise Verfahren, wie simulationsbasiertes Testen oder Replay-HiL (Hardware in the Loop) Lösungen eingesetzt werden. Allerdings liefern testbasierte Verfahren grundsätzlich keine Garantie dafür, dass Fehler entdeckt werden, bzw. dass die getestete Softwarekomponente im Hinblick auf vorab definierte Anforderungen und Randbedingungen immer fehlerfreie Ergebnisse liefert.

Aus der wissenschaftlichen Literatur sind zudem Techniken und Werkzeuge für Model Checking und Probabilistisches Model Checking bekannt, wobei es sich um eine formale Verifikationsmethode handelt. Ein Model Checker prüft alle Ausführungsmöglichkeiten einer Software bzw. eines Modells der Software gegen eine mathematisch präzise formulierte Anforderung. Dabei wird überprüft, ob alle möglichen Ausführungen der Software diese Anforderung erfüllen. Auf diese Weise kann mathematisch formal bewiesen werden, ob die Software bzw. das Modell der Software in Bezug auf die formulierte Anforderung fehlerfrei ist. Als Beispiele für Model Checking-Tools seien an dieser Stelle Spin (http://spinroot.com/spin/whatispin.html) und NuSMV (http://nusmv.fbk.eu/) genannt.

Wesentlich in diesem Zusammenhang ist, dass nur solche Größen als Modellparameter für das Situationsmodell verwendet werden, die auch während des Fahrzeugbetriebs mit Hilfe des Perzeptionsmoduls ermittelt werden. Nur so kann ein Model Checking Verfahren aussagefähige Ergebnisse liefern.

Für die Anwendung der bekannten Model Checking Tools muss der native Programmcode der zu verifizierenden Softwarekomponente in eine Model-Checker-Repräsentation übersetzt werden, die die Struktur eines Endlichen Automaten aufweist. In Anbetracht des Umfangs und der Komplexität von Softwarekomponenten einer automatisierten Fahrfunktion sollte diese Übersetzung weitestgehend automatisch erfolgen. Deshalb wird der native Programmcode der zu verifizierenden Softwarekomponente auf eine Menge von zulässigen Operationen der verwendeten Programmiersprache beschränkt, wobei eine Operation dann als zulässig gilt, wenn sie als Endlicher Automat darstellbar ist.

Der Einsatz von Model Checking zur Verifikation von Softwarekomponenten, wie Verhaltensplanern, erweist sich in der Praxis als sehr vorteilhaft. Zunächst kann mit dieser Methode ein formaler Korrektheitsbeweis erbracht werden, was eine wichtige Rolle für die Zulassung von automatisierten Parkfunktionen spielt. Für den Fall, dass der Korrektheitsbeweis fehlschlägt, können durch Model Checking Gegenbeispiele identifiziert werden, also Konstellationen, bei denen die zu verifizierende Softwarekomponente nicht das angestrebte Ergebnis liefert, bei denen also die für das Model Checking formulierten formalen Anforderungen nicht eingehalten werden. Außerdem können Model Checking Verfahren bei Codestruktur-erhaltender Übersetzung der zu verifizierenden Softwarekomponente in die Model Checker Repräsentation diejenigen Teile des nativen Programmcodes identifizieren, die für eine Nicht-Einhaltung der formalen Anforderungen verantwortlich sind. Model Checking kann also auch vorteilhaft im Rahmen der Software-Entwicklung eingesetzt werden.

Bislang wurde lediglich der Einsatz von Model Checking zur Verifikation von Software-basierten Verhaltensplanern einer automatisierten Fahrfunktion beschrieben.

### Offenbarung der Erfindung

Es wird vorgeschlagen, Model Checking auch zur Verifikation von Software-basierten Verhaltensplanern einer automatisierten Parkfunktion zu nutzen und dabei den besonderen Anforderungen an einen solchen Verhaltensplaner Rechnung zu tragen.

Dazu wird erfindungsgemäß die Verfügbarkeit eines Fahrers, insbesondere die An- oder Abwesenheit des Fahrers, durch mindestens einen Modellparameter des Situationsmodells beschrieben, so dass die Verfügbarkeit des Fahrers im Fahrzeug bei der Analyse der Model-Checker-Repräsentation des Verhaltensplaners berücksichtigt wird. Als verfügbar kann der Fahrer beispielsweise dann angesehen werden, wenn er sich innerhalb des Fahrzeugs befindet oder auch nur innerhalb der Sende-/Empfangsreichweite eines mobilen Endgeräts, mit dem er das Fahrzeug remote überwachen kann und ggf. steuernd in das Parkmanöver eingreifen kann.

Aus der Praxis sind vielfältige Parkfunktionen mit unterschiedlichem Automatisierungsgrad bekannt. Halbautomatisierte Parkfunktionen erfordern in der Regel, dass der Fahrer den Parkvorgang durch eigene Aktionen unterstützt. Dazu muss der Fahrer das Parkmanöver überwachen und ggf. steuernd eingreifen. Dazu kann der Fahrer im Auto sitzen. Die Mitwirkung des Fahrers kann aber auch remote mit Hilfe eines geeigneten mobilen Endgeräts, wie einem Smartphone, erfolgen. So könnte eine halbautomatische Parkfunktion beispielsweise fordern, dass der Fahrer das Gaspedal betätigt, während die Steuerung der Lenkrichtung automatisch vorgenommen wird. Als Beispiele für automatisierte Parkfunktionen, bei denen die Anwesenheit/Unterstütung eines Fahrers gefordert sein könnte, seien hier genannt:
- "Trailer Parking", bei dem der Einparkvorgang eines Fahrzeugs mit Anhänger unterstützt wird.
- "Memory-Parken", bei dem ein sicherer definierter Parkplatz, der von der Straße aus sichtbar ist, automatisch angefahren wird.
- "Home Zone Parking", bei dem eine Verhaltensplanung auf Basis von vorab aufgezeichneten Fahrertrajektorien vorgenommen wird. Diese Parkfunktion ist für Parkmanöver konzipiert, die regelmäßig immer wieder in gleicher oder doch sehr ähnlicher Weise durchgeführt werden, beispielsweise beim Einparken auf dem heimischen Stellplatz oder in der eigenen Garage. Die Parkfunktion manövriert das Fahrzeug mit Hilfe von Ultraschallsensoren, Nahbereichskameras und Kurvenradarsensoren in die Parklücke. Zum Umfahren von kleineren Hindernissen in der Einfahrt wird eine geringfügige Änderung des Weges vorgenommen oder das Fahrzeug wird zum Halten gebracht. Bei dieser Parkfunktion überwacht der Fahrer die Bewegung des Fahrzeugs kontinuierlich, um ggf. steuernd einzugreifen, und zwar entweder aus dem Fahrzeug heraus oder aus der Ferne beispielsweise mit Hilfe eines Smartphones.
- "Random Parking", in Fällen, in denen der Benutzer einen Parkplatz willkürlich definiert.

Im Unterschied dazu werden einige automatische Parkfunktionen nur ausgeführt, wenn der Fahrer das Fahrzeug verlassen hat, sich also kein Fahrzeugführer im Fahrzeug befindet. Ein Beispiel hierfür ist das automatisierte Valet Parking (AVP), d.h. fahrerloses Einparken in einem Parkhaus, das mit einer geeigneten Sensor- und Kommunikationsinfrastruktur ausgestattet ist. Beim sogenannten "large scale parking" übergibt der Fahrer die Fahrzeugkontrolle ebenfalls vollständig an das Fahrzeug, das dann vollautomatisch einen freien Parkplatz anfährt und das Fahrzeug dort abstellt. In diesem Fall kann der Fahrer das Fahrzeug verlassen oder auch im Fahrzeug bleiben.

Die voranstehenden Beispiele zeigen, dass die Verfügbarkeit eines Fahrers bzw. Fahrzeugführers zumindest für die Aktivierung und Deaktivierung der meisten halbautomatisierten und automatisierten Parkfunktionen wesentlich ist.

Diesem Umstand trägt die vorliegende Erfindung Rechnung, indem die Verfügbarkeit des Fahrers und insbesondere dessen An-/Abwesenheitszustand als Modellparameter bei der Verifikation des Verhaltensplaners der Parkfunktion berücksichtigt wird.

In einer vorteilhaften Weiterbildung der Erfindung werden neben der Verfügbarkeit des Fahrers auch "statische" Umgebungsinformationen bei der Verifikation des Verhaltensplaners einer Parkfunktion berücksichtigt, wie sie im Fahrzeugbetrieb vom Perzeptionsmodul erfasst oder ermittelt werden. In diesem Fall umfasst das Situationsmodell Modellparameter für

Umgebungsinformationen, insbesondere für mindestens eine der folgenden Umgebungsinformationen:
a. Position und Orientierung des Fahrzeugs,
b. Belegungszustand eines Parkplatzes,
c. Abstand zwischen Fahrzeug und einem Parkplatz,
d. Abmessungen eines ausgewählten Parkplatzes,
e. Wetterbedingungen,
f. Straßenzustand,
g. Anwesenheit weiterer Verkehrsteilnehmer in einer Umgebung des Fahrzeugs, etc..

Damit kann beispielsweise die Aktivierung bzw. Deaktivierung der Parkfunktion unter unterschiedlichen Umgebungsbedingungen verifiziert werden.

In einer bevorzugten Ausführungsform der Erfindung wird auch eine dynamische Entwicklung der Verkehrs-/Parksituation bei der Verifikation des Verhaltensplaners einer Parkfunktion berücksichtigt. In diesem Fall wird die Bewegung mindestens einer dynamischen Komponente der vorgegebenen Situation mit Hilfe des Situationsmodells modelliert, wobei die Bewegung auf Basis von Modellparametern, insbesondere in Form von Positionsparametern und/oder Bewegungsparametern der dynamischen Komponente, beschrieben wird. Für Parksituationen besonders relevant sind bewegliche Infrastrukturelemente, wie sich öffnende Tore, Türen oder Schranken, und weitere Verkehrsteilnehmer, insbesondere weiterer Fahrzeuge, Fußgänger und Zweiradfahrer, aber auch Tiere. Mögliche Positionen, Stellung und/oder Bewegungen von solchen Infrastrukturelementen und mögliche Trajektorien weiterer Verkehrsteilnehmer können mit Hilfe des Situationsmodells modelliert werden und so bei der Analyse der Model-Checker-Repräsentation des Verhaltensplaners berücksichtigt werden.

Von besonderem Vorteil ist es, wenn bei der Verifikation des Software-basierten Verhaltensplaners einer Parkfunktion die Vielzahl von unterschiedlichen Möglichkeiten für die Entwicklung der Verkehrsszene, insbesondere bedingt durch das nicht-deterministische Verhalten der jeweiligen Verkehrsteilnehmer berücksichtigt wird. Diesen "Unsicherheiten" wird in einer vorteilhaften Weiterbildung der Erfindung Rechnung getragen, indem mit Hilfe des Situationsmodells mindestens ein physikalisch sinnvolles Parameterintervall für mindestens einen Ortsparameter und/oder Bewegungsparameter der Teilnehmer der vorgegebenen Situation bestimmt wird. Dieses mindestens eine Parameterintervall wird dann bei der Analyse der Model-Checker-Repräsentation des Verhaltensplaners berücksichtigt, indem das Model Checking Verfahren dieses Parameterintervall systematisch abtastet (sample) und so den Verhaltensplaner für eine repräsentative Auswahl der möglichen zeitlichen und örtlichen Entwicklungen der vorgegebenen Verkehrsszene prüft.

Wesentlich ist hierbei, dass nicht nur die Grenzen dieser Parameterintervalle betrachtet werden, sondern auch Orts- bzw. Bewegungsparameter, die innerhalb dieser Intervalle liegen, da Grenzwertbetrachtungen insbesondere bei komplexeren Verkehrssituationen nicht zwangsläufig das "worst-case"- oder "best-case"-Szenario beschreiben. Die Abtastung (sampling) der Parameterintervalle erfolgt erfindungsgemäß systematisch, so dass der Model Checker eine repräsentative Auswahl der möglichen zeitlichen und örtlichen Entwicklungen der vorgegebenen Verkehrsszene prüfen kann. Der Zustandsraum des Verhaltensplaners wird auf diese Weise systematisch im Hinblick auf bestehende Unsicherheiten in den Orts- und/oder Bewegungsparametern erweitert. Ob die Parameterintervalle hierfür gleichmäßig oder ungleichmäßig abgetastet werden, und wie viele Abtastwerte für eine repräsentative Auswahl benötigt werden, hängt vom Einzelfall ab.

Des Weiteren erweist es sich als vorteilhaft, wenn mit Hilfe des Situationsmodells Eigenschaften einzelner Sensorkomponenten des Perzeptionsmoduls modelliert werden, insbesondere die Sensorempfindlichkeit und sensor- und/oder übertragungsbedingte Verzögerungen bei der Erfassung und Ermittlung von Messergebnissen. Dadurch wird bei der Korrektheitsprüfung berücksichtigt, dass die Eingangswerte des zu verifizierenden Verhaltensplaners einer "Messunsicherheit" unterliegen. Diese ist in erster Linie auf die Messfehler der einzelnen Sensoren des Perzeptionsmoduls und ggf. auf die Übertragungseigenschaften des Kommunikationsnetzwerks zwischen den beteiligten Datenverarbeitungseinheiten des Fahrzeugs zurückzuführen. Die einzelnen Messfehler pflanzen sich bei der Fusion und Verarbeitung der Sensordaten im Perzeptionsmodul fort, so dass die Ortsparameter und die Bewegungsparameter, die dem Verhaltensplaner zur Verfügung gestellt werden, mit einem bestimmbaren Fehler behaftet sind. Zur Modellierung derartiger Messfehler können die für das verwendete Perzeptionsmodul bestimmten Fehlerintervalle als physikalisch sinnvolle Parameterintervalle verwendet werden.

Wie bereits eingangs erwähnt, ergeben sich für den Verhaltensplaner einer Parkfunktion besondere Herausforderungen, da die Funktionsfähigkeit des Perzeptionsmoduls in Parksituationen häufig eingeschränkt ist, aufgrund von Abschattungen durch andere parkende Fahrzeuge oder Gebäude oder auch durch Umwelteinflüsse, wie Wetter, Tageszeit, Verschmutzung, etc.. Derartige Einschränkungen der Funktionsfähigkeit einzelner Sensorkomponenten des Perzeptionsmoduls lassen sich ebenfalls einfach mit Hilfe des Situationsmodells modellieren und so im Rahmen der Verifikation durch Model Checking berücksichtigen.

Erfindungsgemäß wird außerdem vorgeschlagen, das voranstehend beschriebene Verifikationsverfahren im Rahmen der Entwicklung von Softwarekomponenten einer automatisierten Parkfunktion einzusetzen. Dabei wird vorausgesetzt, dass der Programmcode der Softwarekomponente auf Operationen beschränkt wird, die sich in Form eines Endlichen Automaten (EA) darstellen lassen. In diesem Fall kann die Softwarekomponente automatisch in einen Endlichen Automaten umgewandelt werden, und zwar so, dass die ursprüngliche Codestruktur der Softwarekomponente erhalten bleibt. Auf Basis dieses Endlichen Automaten wird eine Model-Checker-Repräsentation der Softwarekomponente generiert, deren Zustände und Zustandsübergänge sich eindeutig einzelnen Anteilen des Programmcodes der Softwarekomponente zuordnen lassen. Dadurch können "Fehler" im Programmcode, die bei Anwendung eines Model-Checking-Verfahrens auf die Model-Checker Repräsentation zu einer Nicht-Einhaltung einer formalen Anforderung führen, sehr einfach im Programmcode verortet werden. Dies stellt eine große Hilfe im Entwicklungsprozess dar.

Erfindungsgemäß wird dazu zunächst das Situationsmodell in Form eines nativen Situationsmodell-Programmcodes bereitgestellt, der eine vorgebbare Situation auf Basis von Modellparametern beschreibt. Dann wird der native Programmcode der Softwarekomponente und der Situationsmodell-Programmcodes in eine Model-Checker-Repräsentation übersetzt, so dass die Codestruktur der Softwarekomponente im Wesentlichen erhalten bleibt und die Model-Checker-Repräsentation durch die vom Situationsmodell vorgegebene Situation beschränkt ist. Schließlich wird das Model Checking Verfahren auf die Model-Checker-Repräsentation angewendet, um die Softwarekomponente für die vorgegeben Situation im Hinblick auf die Einhaltung der vorgegebenen formalen Anforderungen zu analysieren. Bei Nicht-Einhaltung der vorgegebenen formalen Anforderungen identifiziert das Model Checking Verfahren dann mindestens einen Anteil des nativen Programmcodes der Softwarekomponente, auf den die Nicht-Einhaltung zurückzuführen ist.

Der so identifizierte Anteil der Softwarekomponente kann dann in einem nächsten Entwicklungsschritt modifiziert werden, so dass die Softwarekomponente insgesamt die vorgegebene formale Anforderung erfüllt.

In einer vorteilhaften Variante der Erfindung liefert das Model Checking Verfahren bei Nicht-Einhaltung der vorgegebenen formalen Anforderungen außerdem mindestens ein Gegenbeispiel auf Basis von Modellparametern der vorgegebenen Situation, in der die Softwarekomponente die vorgegebenen formalen Anforderungen nicht einhält. In diesem Fall kann das Model Checking auch zum Generieren von Testdaten für Computer-implementierte automatisierte Parkfunktionen eingesetzt werden, und zwar insbesondere zum Generieren von Testdaten, die sehr selten auftretende Situationen abdecken, sogenannte "Edge Cases".

### Zeichnungen

Ausführungsbeispiele und vorteilhafte Weiterbildungen der Erfindung werden nachfolgend anhand der Figuren näher erläutert.
- **Fig.** 1: zeigt ein Blockdiagramm, das die Wirkungsweise eines erfindungsgemäßen Computer-implementierten Verifikationsverfahren am Beispiel eines Verhaltensplaners der automatisierten Parkfunktion "Home Zone Parking" veranschaulicht.
- **Fig.** 2: zeigt das Blockdiagramm eines Computer-implementierten Systems zum Einsatz bei der Entwicklung von Softwarekomponenten einer automatisierte Parkfunktion.

### Beschreibung von Ausführungsbeispielen

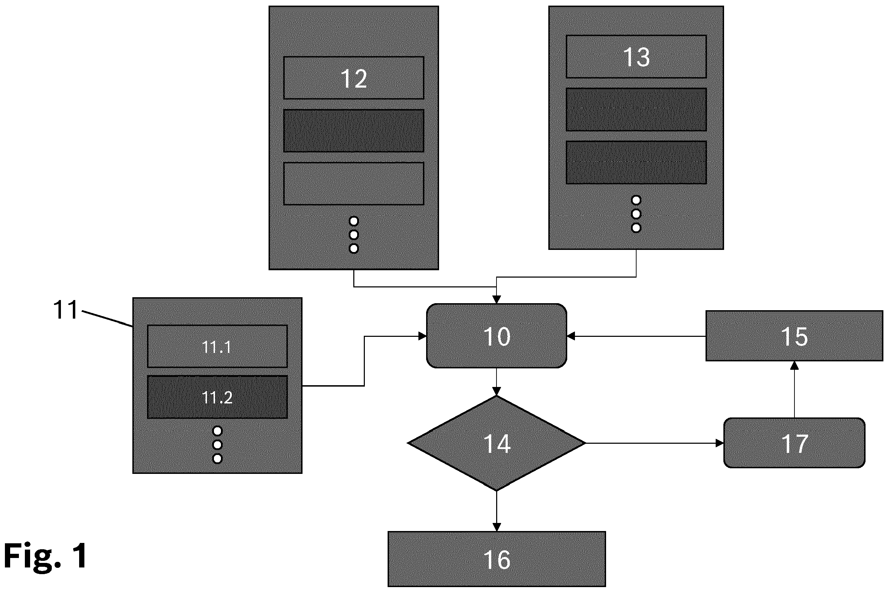

In **Fig.** 1 ist der zentrale Bestandteil des erfindungsgemäßen Verifikationsverfahrens, nämlich ein Model Checker Verfahren in Form eines Funktionsblocks 10 dargestellt. Diesem wird ein Software-basierter Verhaltensplaner 15 der automatisierten Parkfunktion "Home Zone Parking" zur Prüfung zugeführt. Im vorliegenden Fall soll mit Hilfe des Model Checker Verfahrens 10 geprüft werden, ob der Verhaltensplaner 15 "immer" die "richtige" Aktivierungs- bzw. Deaktivierungs-Entscheidung für das "Home Zone Parking" trifft.

Dieser Prüfung wird eine Reihe von Regeln 11 bzw. Bedingungen für eine Aktivierung zugrunde gelegt, die in Form von formalen Anforderungen als Kriterium für die Korrektheit von Entscheidungen des Verhaltensplaners 15 bereitgestellt werden. Zur formalen Beschreibung der Regeln 11 bzw. Bedingungen kann beispielsweise eine lineare temporale Logik (linear temporal logic) verwendet werden.

Wesentlich für "Home Zone Parking" sind die Bedingungen:
11.1 Das Fahrzeug muss sich in der Nähe einer vorbestimmten GPS-Position befindet, was als "Home Zone" bezeichnet wird.
11.2 Der Fahrer muss sich entweder im Fahrzeug befinden, um den Parkvorgang zu überwachen und ggf. zu unterstützen, oder das Fahrzeug muss über eine drahtlose lokale Verbindung mit einem ausgewiesenen Endgerät verbunden sein, über das der Parkvorgang remote überwacht und ggf. unterstützt werden kann.

Daneben müssen aber auch noch weitere Bedingungen erfüllt sein, was in Fig. 1 durch die Punkte in Block 11 angedeutet ist, beispielsweise
- Keine weiteren Verkehrsteilnehmer innerhalb der "Home Zone",
- Straßenzustand: weder Eis noch Schnee, keine Rutschgefahr,
- etc..

Nur wenn alle diese vorab definierten Regeln und Bedingungen 11 erfüllt sind, wird eine Aktivierung der automatischen Parkfunktion "Home Zone Parking" als "richtig" erachtet, in allen anderen Fällen muss der Verhaltensplaner 15 eine Aktivierung unterlassen und ggf. eine Deaktivierung der Parkfunktion veranlassen. Nur dann ist der Verhaltensplaner in Bezug auf die Anforderungen 11 korrekt.

Im Kontext der vorliegenden Erfindung bedeutet "immer", dass der Verhaltensplaner 15 für alle möglichen Ausprägungen einer vorgegebenen Verkehrssituation geprüft wird. D.h. der Prüfungsumfang wird auf vorgegebene Situationen begrenzt. Die entsprechende Beschränkung des Zustandsraums des Verhaltensplaners 15 erfolgt mit Hilfe eines Situationsmodells 12, 13, das eine vorgegebene Situation auf Basis von Modellparametern beschreibt. Vorzugsweise entspricht das Situationsmodell 12, 13 einem Laufzeit-Situationsmodell, das im Fahrzeugbetrieb die jeweils aktuelle Verkehrssituation in der näheren Umgebung des Fahrzeugs auf der Basis von Sensordaten beschreibt und kontinuierlich aktualisiert. Dafür ist ein Perzeptionsmodul vorgesehen, welches die Sensordaten einer Vielzahl von Sensoren sammelt, fusioniert und verarbeitet. Als Beispiele für Sensoren eines Perzeptionsmoduls seien hier Kamera, Lidar, Radar, Ultraschall und eine IMU (inertial measurement unit) genannt. Des Weiteren umfasst das Perzeptionsmodul mindestens einen Sensor zum Erfassen der Verfügbarkeit des Fahrers im Fahrzeug. Dabei kann es sich beispielsweise um eine Innenraumkamera handeln oder auch um eine im Fahrersitz verbaute Drucksensoranordnung, womit die An- oder Abwesenheit eines Fahrers im Fahrzeug detektierbar ist. Die Verfügbarkeit eines Fahrzeugführers kann aber beispielsweise auch über eine Verbindung zu einem ausgewiesenen Smartphone detektiert werden, mit dem das Fahrzeug remote steuerbar ist. Erfindungsgemäß werden für das Situationsmodell 12, 13 dieselben Parameter verwendet, die auch während des Fahrzeugbetriebs mit Hilfe eines Perzeptionsmoduls ermittelt werden.

Das Situationsmodell 12, 13 wird bei der Übersetzung des Verhaltensplaners 15 in eine Model Checker Repräsentation berücksichtigt, wodurch der Zustandsraum der Model Checker Repräsentation auf die vorgegebene Situation beschränkt wird.

Die so erzeugte Model Checker Repräsentation des Verhaltensplaners 15 wird dann mit Hilfe des Model Checking Verfahrens 10 im Hinblick auf die die formalen Anforderungen 11 geprüft.

Durch Einbeziehung des Situationsmodells wird erfindungsgemäß geprüft, ob der Verhaltensplaner 15 die Anforderungen 11 für alle möglichen Entwicklungen der Verkehrssituation, d.h. für alle möglichen vom Situationsmodell vorgesehenen Konstellationen erfüllt, so dass ausgeschlossen werden kann, dass durch die Aktivierungs-Entscheidung des Verhaltensplaners 15 eine Gefahrensituation herbeigeführt wird.

Im hier dargestellten Ausführungsbeispiel umfasst das Situationsmodell Modellparameter für mehr oder weniger statische Umgebungsinformationen, was durch den Block 12 veranschaulicht wird. Dazu zählen beispielsweise: Positionsdaten und Orientierungsdaten des Fahrzeugs, die mittels GPS und Fahrzeugsensorik erfasst werden können; Belegungszustand eines Parkplatzes, Abstand zwischen Fahrzeug und einem Parkplatz und Abmessungen eines ausgewählten Parkplatzes, was mit Hilfe von Kamera-, Lidar- und Radarsensoren erfasst werden kann; Wetterbedingungen und Straßenzustand, was Satelliten-basiert und auch mit Hilfe einer fahrzeugeigenen Sensorik ermittelt werden kann; Anwesenheit weiterer Verkehrsteilnehmer in einer Umgebung des Fahrzeugs, was ebenfalls mit Hilfe von Kamera-, Lidar- und Radarsensoren ermittelt werden kann. Block 12 des Situationsmodells können auch die Modelparameter zugeordnet werden, die eine Verfügbarkeit eines Fahrers beschreiben.

Des Weiteren modelliert das Situationsmodell im hier beschriebenen Ausführungsbeispiel die Bewegung mindestens einer dynamischen Komponente der vorgegebenen Situation, was durch den Block 13 veranschaulicht wird. Diese Bewegungen werden bevorzugt auf Basis von Positionsparametern und/oder Bewegungsparametern der dynamischen Komponente beschrieben. Die Modellierung der möglichen Positionen, Stellungen und/oder Bewegungen von Infrastrukturelementen, insbesondere von Toren oder Schranken, ist im Kontext von automatisierten Parkfunktionen von besonderer Bedeutung. Aber auch die möglichen Trajektorien weiterer Verkehrsteilnehmer, insbesondere weiterer Fahrzeuge, Fußgänger und Zweiradfahrer, können so bei der Analyse der Model-Checker-Repräsentation des Verhaltensplaners 15 berücksichtigt werden.

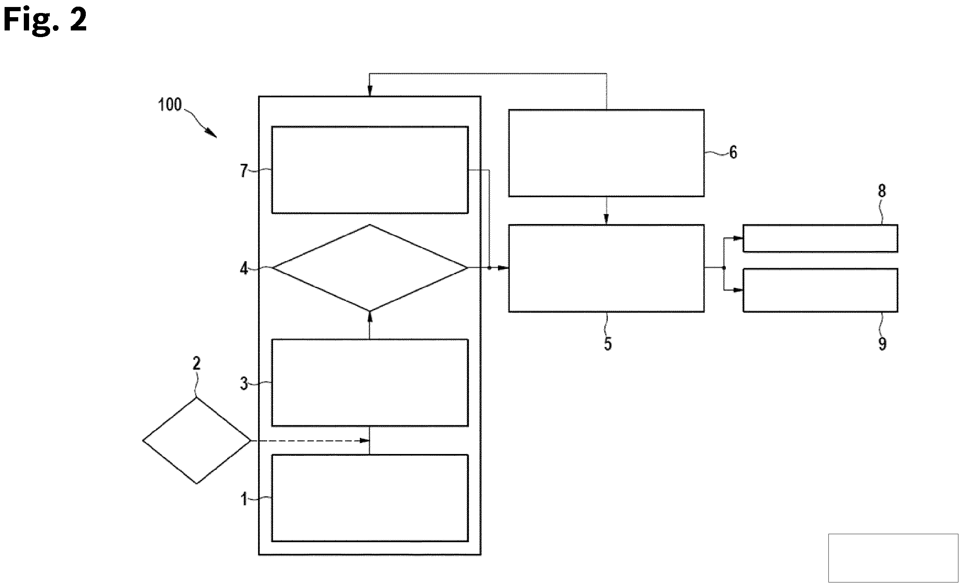

Das Model Checker Verfahren 10 liefert im einfachsten Fall ein binäres Ergebnis 14, nämlich entweder, dass die Anforderungen 11 für alle abgeprüften Konstellationen aller vorgegebenen Situationen erfüllt werden, was einem mathematischen Beweis 16 für die Korrektheit des Verhaltensplaners 15 in Bezug auf die Anforderungen 11 entspricht, oder, dass es zumindest eine abgeprüfte Konstellation gibt, in der nicht alle Anforderungen 11 erfüllt werden. Dieses Gegenbeispiel kann einfach auf Basis der entsprechenden Modellparameter derjenigen Situation angegeben werden, in der die Softwarekomponente die vorgegebenen formalen Anforderungen 11 nicht einhält. Außerdem kann das Gegenbeispiel dazu genutzt werden, die Software-Implementierung des Verhaltensplaners 15 so zu modifizieren bzw. zu verbessern, was hier durch den Funktionsblock 17 angedeutet ist und in Verbindung mit Fig. 2 näher erläutert wird.

In **Fig. 2** ist ein erfindungsgemäßes System 100 zur Verifikation eines Software-basierten Verhaltensplaners dargestellt, das in vorteilhafter Weise bei der Entwicklung von Softwarekomponenten einer automatisierten Parkfunktion eingesetzt werden kann.

Der Verhaltensplaner liegt hier in Form eines nativen Programmcodes 1 vor, beispielsweise in der Programmiersprache C++ oder Python.

Das System 100 umfasst ein Übersetzungsmodul, das die Codestruktur des nativen Programmcodes 1 beim Übersetzen in eine Model-Checker-Repräsentation im Wesentlichen erhält. Hierfür sind die Blöcke 2 und 4 vorgesehen. Voraussetzung dafür, dass eine derartige Übersetzung vollständig automatisch erfolgt, ist, dass der native Programmcode nur Operationen enthält, die selbst als Endlicher Automat darstellbar sind. Dementsprechend darf der native Programmcode 1 hier nicht alle zur Verfügung stehenden Operationen der jeweiligen Programmiersprache nutzen, sondern nur eine Teilmenge der verfügbaren Operationen. Im Fall von C++ oder Python-Programmen wird dazu beispielsweise auf alle Schleifen-/GoTo-/Rekursionsstrukturen verzichtet. Der native Programmcode 1 wird zunächst in einen Endlichen Automaten (EA) umgewandelt, dessen Zustände und Zustandsübergänge der Codestruktur des nativen Programmcodes eindeutig zuordenbar sind, um dann auf Basis dieses Endlichen Automaten eine Model-Checker-Repräsentation zu erzeugen, so dass die Codestruktur des nativen Programmcodes beim Übersetzen in die Model-Checker-Repräsentation im Wesentlichen erhalten bleibt. An dieser Stelle sei angemerkt, dass in bestimmten Fällen der so erzeugte Endliche Automat bereits als Model-Checker-Repräsentation, also als Input für den Model Checker, verwendet werden kann. In diesen Fällen ist kein weiterer Übersetzungsschritt erforderlich.

Im hier dargestellten Ausführungsbeispiel erfolgt die Umwandlung des nativen Programmcodes 1 in einen Endlichen Automaten in zwei Schritten. Im ersten Schritt, dem sogenannten Schürfen - Block 2, werden im nativen Programmcode EA-artige Strukturen von einem bestimmten Typ detektiert. Den automatisch detektierten EAartigen Programmstrukturen werden - ebenfalls automatisch - entsprechende EA-Zuständen und EA-Zustandsübergängen zugeordnet. Dabei wird eine Zwischenrepräsentation 3 des nativen Programmcodes generiert. Diese Zwischenrepräsentation 3 weist bereits die Struktur eines Endlichen Automaten auf, in dem aber die Struktur des nativen Programmcodes erhalten ist. Die verbleibenden Teile des nativen Programmcodes sind in die EA-Struktur der Zwischenrepräsentation 3 eingebettet. Diese sogenannten Code-Anteile der Zwischenrepräsentation 3 werden dann in einem weiteren Schritt 4 ebenfalls automatisch in EA-Anteile umgewandelt. Dabei wird ein Endlicher Automat erzeugt, der den nativen Programmcode vollständig repräsentiert und in dem die Struktur des nativen Programmcodes erhalten ist. Dieser Endliche Automat kann dann entweder in eine Model-Checker-Repräsentation übersetzt werden oder direkt für das Model Checking verwendet werden.

Die Anwendung eines Model Checking Verfahrens auf die Model-Checker-Repräsentation des Verhaltensplaners erfolgt in einem Model-Checker Modul 5 und dient der Analyse der Software-Implementierung des Verhaltensplaners im Hinblick auf die Einhaltung von vorgebbaren formalen Anforderungen, wie sie in Verbindung mit Fig 1. erläutert worden sind. Die formalen Anforderungen werden hier mit Hilfe eines Anforderungsmoduls 6 vorgegeben.

Zudem umfasst das System 100 ein Situationsmodellierungs-Modul 7, welches die physikalischen Eigenschaften der Umgebung, das Verhalten von dynamischen Komponenten in der Umgebung des Fahrzeugs, wie z.B. das Verhalten weiterer Verkehrsteilnehmer und weitere externe Systemparameter modelliert und als Situationsmodell bereitstellt, und zwar in Form eines nativen Situationsmodell-Programmcodes, der eine vorgebbare Situation auf Basis von Modellparametern beschreibt. Insbesondere beschreibt das Situationsmodell die Verfügbarkeit des Fahrers, beispielsweise seine An- oder Abwesenheit im Fahrzeug, und die zeitliche und örtliche Entwicklung einer vorgebbaren Verkehrssituation auf der Basis von Orts- und Bewegungsparametern von Teilnehmern und Infrastrukturelementen in einer gegebenen Situation. Das Situationsmodellierungs-Modul 7 ist hier auch dazu ausgelegt, physikalisch sinnvolle Parameterintervalle für mindestens einen Modellparameter der vorgegebenen Verkehrssituation zu bestimmen sowie Eigenschaften und Einschränkungen der Funktionsfähigkeit einzelner Sensorkomponenten des Perzeptionsmoduls zu modellieren. Das so bereitgestellte Situationsmodell erzeugt Randbedingungen, die den Zustandsraum des Verhaltensplaners beschränken. Es wird beim Übersetzen des nativen Programmcodes 1 in eine Model-Checker-Repräsentation berücksichtigt, so dass die Model-Checker-Repräsentation durch die Randbedingungen des Verifikations-Umfeldmodells beschränkt ist.

Das Model-Checker-Modul 5 ist dazu ausgelegt, die als physikalisch sinnvoll bestimmten Parameterintervall der Modellparameter bei der Analyse der Model-Checker-Repräsentation des Verhaltensplaners zu berücksichtigen, indem das Model Checking Verfahren dieses Parameterintervall systematisch abtastet und so den Verhaltensplaner für eine repräsentative Auswahl der möglichen zeitlichen und örtlichen Entwicklungen der vorgegebenen Verkehrsszene prüft.

Zum Ausgeben von Ergebnissen der Model-Checker Analyse umfasst das System 100 ein Ausgabemodul - hier die Blöcke 8 und 9. Block 8 zeigt an, ob der Verhaltensplaner die vorgegebene formale Anforderung einhält oder nicht, was als "Korrektheitsbeweis" bezeichnet wird.

Bei Nicht-Einhaltung der vorgegebenen formalen Anforderung liefert Block 9 mindestens ein Gegenbeispiel in Form einer Verkehrssituation, in der der Verhaltensplaner die vorgegebenen formalen Anforderungen nicht einhält. Das könnte beispielsweise durch Anzeige und Replay eines Gegenbeispiels erfolgen.

Außerdem liefert Block 9 die Identifikation derjenigen Anteile des nativen Programmcodes des Verhaltensplaners, auf die die Nicht-Einhaltung zurückzuführen ist.

Diese Informationen können dann von einem Entwickler zur gezielten Modifikation des Verhaltensplaners genutzt werden.

## Patentansprüche

1. Computer-implementiertes Verfahren zur Verifikation eines Software-basierten Verhaltensplaners (15) für eine automatisierte Parkfunktion eines Fahrzeugs,
wobei das Verifikationsverfahren zumindest die folgenden Schritte umfasst:
h. Bereitstellen mindestens einer formalen Anforderung (11) als Kriterium für die Korrektheit von Entscheidungen des Verhaltensplaners (15) der Parkfunktion,
i. Bereitstellen eines Situationsmodells (12, 13) zur Beschränkung des Zustandsraums des Verhaltensplaners (15) entsprechend einer vorgebbaren Situation, wobei die Situation auf Basis von Modellparametern beschrieben wird, die während des Fahrzeugbetriebs mit Hilfe eines Perzeptionsmoduls ermittelt werden,
j. Erzeugen einer Model-Checker-Repräsentation des Verhaltensplaners (15) unter Berücksichtigung des bereitgestellten Situationsmodells (12, 13),
k. Analysieren der Model-Checker-Repräsentation des Verhaltensplaners mit einem Model Checking Verfahren (10) im Hinblick auf die mindestens eine formale Anforderung (11),
**dadurch gekennzeichnet, dass** die Verfügbarkeit eines Fahrers, insbesondere die An- oder Abwesenheit des Fahrers, durch mindestens einen Modellparameter des Situationsmodells (12) beschrieben wird, so dass die Verfügbarkeit des Fahrers bei der Analyse der Model-Checker-Repräsentation des Verhaltensplaners (15) berücksichtigt wird.

2. Verfahren nach Anspruch 1, **dadurch gekennzeichnet, dass** mindestens eine formale Anforderung (11) als Kriterium für die Korrektheit des Aktivierens oder Deaktivierens der Parkfunktion bereitgestellt wird.

3. Verfahren nach Anspruch 1 oder 2, **dadurch gekennzeichnet, dass** das Situationsmodell (12) Modellparameter für Umgebungsinformationen umfasst, insbesondere für mindestens eine der folgenden Umgebungsinformationen:
a. Position und Orientierung des Fahrzeugs,
b. Belegungszustand eines Parkplatzes,
c. Abstand zwischen Fahrzeug und einem Parkplatz,
d. Abmessungen eines ausgewählten Parkplatzes,
e. Wetterbedingungen,
f. Straßenzustand,
g. Anwesenheit weiterer Verkehrsteilnehmer in einer Umgebung des Fahrzeugs.

4. Verfahren nach einem der Ansprüche 1 bis 3, **dadurch gekennzeichnet, dass** mit Hilfe des Situationsmodells (13) die Bewegung mindestens einer dynamischen Komponente der vorgegebenen Situation modelliert wird, wobei die Bewegung auf Basis von Modellparametern, insbesondere in Form von Positionsparametern und/oder Bewegungsparametern der dynamischen Komponente, beschrieben wird.

5. Verfahren nach Anspruch 4, **dadurch gekennzeichnet, dass** mit Hilfe des Situationsmodells (12, 13) mögliche Positionen, Stellung und/oder Bewegungen von Infrastrukturelementen, insbesondere von Toren oder Schranken, und mögliche Trajektorien weiterer Verkehrsteilnehmer, insbesondere weiterer Fahrzeuge, Fußgänger und Zweiradfahrer, bei der Analyse der Model-Checker-Repräsentation des Verhaltensplaners (15) berücksichtigt werden.

6. Verfahren nach einem der Ansprüche 4 oder 5, **dadurch gekennzeichnet, dass** mit Hilfe des Situationsmodells (12, 13) mindestens ein physikalisch sinnvolles Parameterintervall für mindestens einen Positionsparameter und/oder Bewegungsparameter der dynamischen Komponente bestimmt wird und dass dieses mindestens eine Parameterintervall bei der Analyse der Model-Checker-Repräsentation des Verhaltensplaners (15) der Parkfunktion berücksichtigt wird, indem das Model Checking Verfahren (10) dieses Parameterintervall systematisch abtastet und so den Verhaltensplaner (15) für eine repräsentative Auswahl der möglichen zeitlichen und örtlichen Entwicklungen der vorgegebenen Situation prüft.

7. Verfahren nach einem der Ansprüche 1 bis 6, **dadurch gekennzeichnet, dass** mit Hilfe des Situationsmodells (12, 13) Eigenschaften einzelner Sensorkomponenten des Perzeptionsmoduls modelliert werden, insbesondere die Sensorempfindlichkeit und sensor- und/oder übertragungsbedingte Verzögerungen bei der Erfassung und Ermittlung von Messergebnissen.

8. Verfahren nach einem der Ansprüche 1 bis 7, **dadurch gekennzeichnet, dass** mit Hilfe des Situationsmodells (12, 13) Einschränkungen der Funktionsfähigkeit einzelner Sensorkomponenten des Perzeptionsmoduls modelliert werden, insbesondere durch Umgebungseinflüsse bedingte Einschränkungen der Funktionsfähigkeit.

9. Computer-lesbares Speichermedium, auf dem ein Programmcode abgespeichert ist, der einen Computer dazu veranlasst, ein Verfahren gemäß einem der Ansprüche 1 bis 8 auszuführen.

10. Verwendung eines Verfahrens gemäß einem der Ansprüche 1 bis 8 bei der Entwicklung von Softwarekomponenten einer automatisierten Parkfunktion, **gekennzeichnet durch**,
• Bereitstellen des Situationsmodells in Form eines nativen Situationsmodell-Programmcodes, der eine vorgebbare Situation auf Basis von Modellparametern beschreibt,
• Übersetzen des nativen Programmcodes der Softwarekomponente und des Situationsmodell-Programmcodes in eine Model-Checker-Repräsentation, so dass die Codestruktur der Softwarekomponente im Wesentlichen erhalten bleibt und die Model-Checker-Repräsentation durch die vom Situationsmodell vorgegebene Situation beschränkt ist,
• Anwenden des Model Checking Verfahrens auf die Model-Checker-Repräsentation zur Analyse der Softwarekomponente für die vorgegeben Situation im Hinblick auf die Einhaltung der vorgegebenen formalen Anforderung,
wobei bei Nicht-Einhaltung der vorgegebenen formalen Anforderung mindestens ein Anteil des nativen Programmcodes der Softwarekomponente identifiziert wird, auf den die Nicht-Einhaltung zurückzuführen ist.

11. Verwendung nach Anspruch 10, **dadurch gekennzeichnet, dass** bei Nicht-Einhaltung der vorgegebenen formalen Anforderung mindestens ein Gegenbeispiel auf Basis von Modellparametern einer Situation angegeben wird, in der die Softwarekomponente die vorgegebenen formalen Anforderungen nicht einhält.

12. Computer-implementiertes System (100) zum Einsatz bei der Entwicklung von Softwarekomponenten einer automatisierte Parkfunktion, mindestens umfassend:
a) Ein Anforderungsmodul (6) zum Vorgeben mindestens einer wahlweise modifizierbaren formalen Anforderung als Kriterium für die Korrektheit der automatisierten Parkfunktion,
b) Ein Übersetzungsmodul (2, 4) zum Übersetzen des nativen Programmcodes (1) einer Softwarekomponente der automatisierten Parkfunktion in eine Model-Checker-Repräsentation, deren Zustandsraum durch ein Situationsmodell beschränkt ist, welches eine vorgebbare Situation auf Basis von Modellparametern beschreibt,
wobei das Übersetzungsmodul (2,4) dazu ausgelegt ist, die Codestruktur des nativen Programmcodes (1) bei der Übersetzung in die Model-Checker-Repräsentation im Wesentlichen zu erhalten,
c) Ein Model-Checker Modul (5) zum Anwenden eines Model Checking Verfahrens auf die Model-Checker-Repräsentation zur Analyse der Softwarekomponente im Hinblick auf die Einhaltung der vorgegebenen formalen Anforderung,
wobei das Model-Checker-Modul (5) dazu ausgelegt ist, bei Nicht-Einhaltung der formalen Anforderung mindestens einen Anteil des nativen Programmcodes der Softwarekomponente zu identifizieren, auf den die Nicht-Einhaltung zurückzuführen ist.
